# EUROPÄISCHE PATENTANMELDUNG

(11) **EP 4 674 697 A1**
(43) Veröffentlichungstag der Anmeldung: **07.01.2026**
(21) Anmeldenummer: 25176383.5
(22) Anmeldetag: 14.05.2025
(51) Int. Cl.: B60T 1/04, B61H 1/00, F16D 49/16, F16D 65/06

(54) **KLOTZBREMSEINHEIT FÜR EINE AN EINEM DREHGESTELL EINES SCHIENENFAHRZEUGS ANGEORDNETE KLOTZBREMSEINRICHTUNG**

(30) Priorität: 02.07.2024 DE 102024118792
(71) Anmelder: KNORR-BREMSE Systeme für Schienenfahrzeuge GmbH, 80809 München (DE)
(72) Erfinder: MÜLLEK, Ferenc, 8000 Szekesfehervar (HU); ELSTORPFF, Marc-Gregory, 80368 München (DE); PAK, György Istvan, 2220 Vecses (HU); SOFRO, Csaba, 1181 Budapest (HU); JENEI, Bela, 1118 Budapest (HU)

(57) **Zusammenfassung**

Eine Klotzbremseinheit () für eine an einem Drehgestell eines Schienenfahrzeugs angeordnete Klotzbremseinrichtung (1) weist einen ersten Bremsschuh (5) auf, an dem wenigstens ein an die Lauffläche (21) eines Schienenrads (2) andrückbarer Bremsklotz (4) befestigbar ist, und einen Bremsschuhhalter (7) mit einer Bremsschuhaufnahme (71), in der der erste Bremsschuh (5) aufgenommen ist, und einer seitlich der Bremsschuhaufnahme (71) angeformten Befestigungsschnittstelle (72) zur Fixierung des Bremsschuhhalters (7) an einem Bremsbalken (10, 11) der Klotzbremseinrichtung (1), wobei der Bremsschuh (5) mittels eines parallel zu einer Drehachse (AR) des Schienenrads (2) ausgerichteten Haltebolzens (8) schwenkbar am Bremsschuhhalter (7) gelagert ist, wobei der Haltebolzen (8) in Bolzenaufnahmen (73) der Bremsschuhaufnahme (7) fixiert ist, wobei in dem Bremsschuhhalter (7) ein in Richtung der Drehachse (AR) des Schienenrads (2) parallel zum ersten Bremsschuh (5) versetzt ausgerichteter zweiter Bremsschuh (6) aufgenommen ist. Des Weiteren wird eine Klotzbremseinrichtung (1) für ein Drehgestell eines Schienenfahrzeugs beschrieben.

## Beschreibung

Die vorliegende Erfindung betrifft eine Klotzbremseinheit für eine an einem Drehgestell eines Schienenfahrzeugs angeordnete Klotzbremseinrichtung gemäß dem Oberbegriff des Anspruchs 1. Die Erfindung betrifft des Weiteren eine Klotzbremseinrichtung für ein Drehgestell eines Schienenfahrzeugs.

Eine gattungsgemäße Klotzbremseinheit ist beispielsweise aus der EP 1593571 B1 bekannt. Solche Klotzbremseinrichtungen werden üblicherweise an einem Drehgestell eines Schienenfahrzeugs mit zwei Radsätzen mit je zwei Schienenrädern, die paarweise auf einer Radachse angeordnet sind, angeordnet. Die Klotzbremseinrichtung besteht dabei aus vier solcher Klotzbremseinheiten, die an zwei parallel zueinander verlaufenden Bremsbalken fixiert werden. Die Bremsbalken stehen dabei über Druckstangen miteinander in Verbindung, die beispielsweise über einen Zylinderkolbentrieb voneinander weggedrückt werden können, um so Bremsklötze der an den Bremsbalken angebrachten Klotzbremseinheiten gegen die Laufflächen der Schienenräder zu drücken.

Jede der Klotzbremseinheiten besteht somit im Wesentlichen aus einem Bremsschuh und einem den Bremsschuh haltenden Bremsschuhhalter, der im Bereich eines seitlichen Endes eines jeweiligen Bremsbalkens befestigt ist.

Die mit solchen Klotzbremseinrichtungen mit daran angeordneten Klotzbremseinheiten ausgestatteten Güterwageneinheiten sind üblicherweise für konstante Spurweiten ausgelegt.

Sofern das Befahren von Strecken mit anderer Spurweite mit diesen Güterwagen vorgesehen ist, wird üblicherweise das gesamte Drehgestell und damit auch die gesamte Klotzbremseinrichtung ausgetauscht.

In anderen Fällen wird lediglich der Radsatz gewechselt und die Bremsschuhe zusammen mit den Schienenrädern mit verschoben, wie es beispielsweise aus der DE 1455150 C bekannt ist.

Nachteilig ist, dass der Austausch der gesamten Bremseinheiten bzw. des Drehgestells relativ teuer und zeitaufwändig ist.

Aufgabe der vorliegenden Erfindung ist es, eine Klotzbremseinheit sowie eine Klotzbremseinrichtung mit mehreren solcher Klotzbremseinheiten dahingehend weiterzuentwickeln, dass ein Austausch der Bremseinheiten oder des Drehgestells vermieden werden kann.

Die gestellte Aufgabe wird durch eine Klotzbremseinheit mit den Merkmalen des Anspruchs 1 sowie durch eine Klotzbremseinrichtung mit den Merkmalen des Anspruchs 11 gelöst.

Die erfindungsgemäße Klotzbremseinheit für eine an einem Drehgestell eines Schienenfahrzeugs angeordnete Klotzbremseinrichtung weist einen ersten Bremsschuh auf, an dem wenigstens ein an die Lauffläche eines Schienenrads andrückbarer Bremsklotz befestigbar ist.

Die Klotzbremseinheit weist des Weiteren einen Bremsschuhhalter auf, mit einer Bremsschuhaufnahme in der der erste Bremsschuh aufgenommen ist sowie einer seitlich der Bremsschuhaufnahme angeformten Befestigungsschnittstelle zur Fixierung des Bremsschuhhalters an einem Bremsbalken der Klotzbremseinrichtung.

Der Bremsschuh ist mittels eines parallel zu einer Drehachse des Schienenrads ausgerichteten Haltebolzens schwenkbar am Bremsschuhhalter gelagert. Der Haltebolzen ist in Bolzenaufnahmen der Bremsschuhaufnahme fixiert.

In dem Bremsschuhhalter ist ein in Richtung der Drehachse des Schienenrads parallel zum ersten Bremsschuh versetzt ausgerichteter zweiter Bremsschuh aufgenommen.

Durch die Ausbildung der Klotzbremseinheit mit zwei nebeneinander angeordneten Bremsschuhen ist es ermöglicht, die Klotzbremseinheit für zwei voneinander verschiedene Spurweiten, beispielsweise für die Spurweite gemäß dem europäischen Standard von 1435 mm und für eine Breitspur, wie beispielsweise den spanischen Standard mit einer Spurweite von 1668 mm auszurichten.

Damit ist ermöglicht, dass der Austausch der gesamten Bremseinheit vermieden werden kann. Beim Wechsel der Spurweite wird bevorzugt lediglich an dem jeweiligen Bremsschuh der Bremsklotz befestigt und an dem Bremsschuh für die nicht genutzte Spurweite der Bremsklotz abgenommen.

Vorteilhafte Ausführungsvariante der Erfindung sind Gegenstand der Unteransprüche.

Gemäß einer vorteilhaften Ausführungsvariante weist jeder der Bremsschuhe ein u-förmiges Gehäuse mit zwei parallel zueinander ausgerichteten Seitenwänden und einer die Seitenwände miteinander verbindenden Koppelfläche zur Aufnahme des wenigstens einen Bremsklotzes auf.

Dabei weist jede der Seitenwände eine Durchgangsbohrung zur Aufnahme des Haltebolzens auf, welcher sich im montierten Zustand durch beide Bremsschuhe erstreckt.

Gemäß einer vorteilhaften Weiterbildung sind der erste Bremsschuh und der zweite Bremsschuh als separate Bauteile ausgebildet.

Gemäß einer alternativen Ausführungsvariante sind der erste Bremsschuh und der zweite Bremsschuh als einstückiges, durch wenigstens eine Brücke miteinander verbundenes Bauteil ausgebildet.

Nach einer weiteren bevorzugten Ausführungsvariante ist der Abstand der Koppelfläche des ersten Bremsschuhs vom Haltebolzen kleiner oder größer als der Abstand der Koppelfläche des zweiten Bremsschuhs vom Haltebolzen.

Ein solcher Versatz ermöglicht in einfacher Weise, bei Quer- und Längsbewegungen des Schienenradsatzes genügend Freiraum zwischen einem äußeren Radkranz und einem inneren Bremsschuhhalter bereitzustellen.

Gemäß einer bevorzugten Weiterbildung weisen die zwei parallel zueinander ausgerichteten Seitenwände des ersten Bremsschuhs und des zweiten Bremsschuhs unterschiedliche Höhen, betrachtet in Richtung einer Normalen der Koppelfläche auf.

Die Ausbildung der Seitenwände des Bremsschuhs mit unterschiedlichen Höhen ermöglicht in einfacher Weise den Versatz der Koppelfläche der beiden Bremsschuhe relativ zueinander.

Um diesen Versatz zwischen den beiden Koppelflächen der Bremsschuhe möglichst klein zu halten, ist gemäß einer weiteren bevorzugten Ausführungsvariante zumindest einer der beiden nebeneinander angeordneten Bremsschuhe entlang seiner dem anderen der beiden Bremsschuhe zugewandten Seite ein die Breite der Koppelfläche, betrachtet in Richtung der Drehachse des Schienenrads, verjüngender Einschnitt im Bereich der Koppelfläche angeformt.

In einer besonders bevorzugten Ausführungsvariante ist jeweils ein die Breite der Koppelfläche, betrachtet in Richtung der Drehachse des Schienenrads, verjüngender Einschnitt entlang beider Seiten des ersten Bremsschuhs und des zweiten Bremsschuhs vorgesehen.

Der wenigstens eine Einschnitt erstreckt sich gemäß einer weiteren vorteilhaften Weiterbildung bis in die angrenzende Seitenwand des u-förmigen Gehäuses.

Gemäß einer weiteren vorteilhaften Ausführungsvariante der Erfindung ist in einem Bereich zwischen einander zugewandten Seitenwänden der Bremsschuhe der Haltebolzen von einer Abstandshülse umgriffen.

Dadurch ist eine zusätzliche Kippstabilisierung der beiden Bremsschuh gewährleistet.

Die erfindungsgemäße Klotzbremseinrichtung für ein Drehgestell eines Schienenfahrzeugs mit zwei in Fahrtrichtung hintereinander angeordneten Radsätzen mit je zwei in einer Querrichtung senkrecht zur Fahrtrichtung angeordneten Schienenrädern weist zwei in Querrichtung angeordnete Bremsbalken auf, an denen jeweils zwei Klotzbremseinheiten befestigt sind sowie wenigstens zwei mit den Bremsbalken gekoppelte, in ihrer Länge einstellbare Druckstangen, mit denen ein Abstand zwischen den Bremsbalken zum Bremseingriff veränderbar ist.

Die Klotzbremseinheiten sind dabei wie oben beschrieben ausgebildet.

Nachfolgend werden bevorzugten Ausführungsbeispiele der Erfindung anhand der beiliegenden Zeichnungen näher erläutert. Es zeigen:
- Fig. 1: eine perspektivische Darstellung einer gattungsgemäßen Klotzbremseinrichtung gemäß dem Stand der Technik,
- Fig. 2: eine perspektivische Darstellung einer Ausführungsvariante einer erfindungsgemäßen Klotzbremseinheit, montiert an einem Bremsbalken einer Klotzbremseinrichtung,
- Fig. 3: eine Draufsicht auf die Klotzbremseinheit gemäß Fig. 2
- Fig. 4: eine Schnittansicht durch eine in Fig. 3 mit IV bezeichnete Schnittebene zur Darstellung der nebeneinander angeordneten Bremsschuhe,
- Fig. 5: eine perspektivische Darstellung der Klotzbremseinheit mit an einem äußeren Bremsschuh angebrachten Bremsklötzen,
- Fig. 6 und 7: perspektivische Einzeldarstellungen einer Ausführungsvariante des ersten und zweiten Bremsschuhs als einstückiges Bauteil, verbunden durch zwei Brücken,
- Fig. 8: eine Schnittdarstellung einer Klotzbremseinheit mit an einem inneren Bremsschuh angebrachten Bremsklotz oberhalb eines Schienenrads,
- Fig. 9: eine der Fig. 8 entsprechende Darstellung mit an einem äußeren Bremsschuh angebrachten Bremsklotz oberhalb eines Schienenrads und
- Fig. 10: eine weitere Schnittdarstellung durch die Klotzbremseinheit zur Darstellung eines Austauschs eines Bremsklotzes vom inneren Bremsschuh.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Klotzbremseinheit, Bremsschuh, Bremsschuhhalter, Schienenrad, Bremsklotz und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

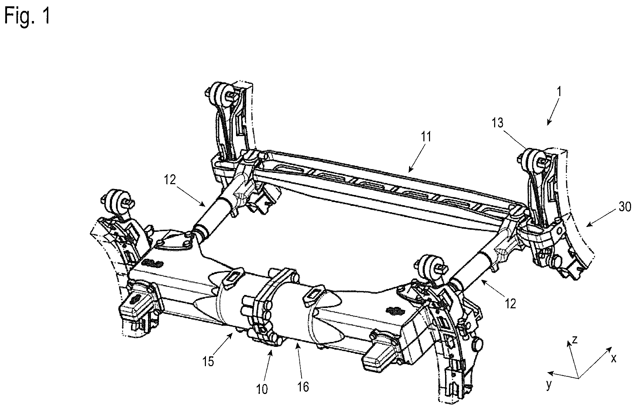

In Figur 1 ist mit dem Bezugszeichen 1 insgesamt eine aus dem Stand der Technik bekannte Klotzbremseinrichtung bezeichnet.

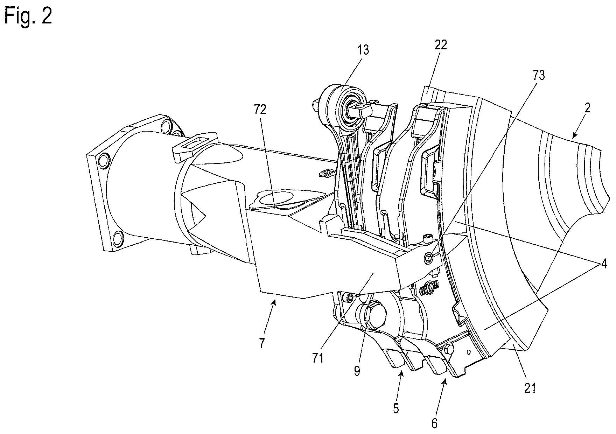

Eine solche Klotzbremseinrichtung 1 für ein Drehgestell eines Schienenfahrzeugs mit zwei in Fahrtrichtung X hintereinander angeordneten Radsätzen (nicht gezeigt) mit je zwei in einer horizontalen Querrichtung Y senkrecht zur Fahrtrichtung X angeordneten Schienenrädern 2 (dargestellt in Fig. 2) weist im Wesentlichen zwei in Querrichtung Y angeordnete Bremsbalken 10, 11 auf, an deren in Querrichtung Y betrachteten Enden jeweils eine aus dem Stand der Technik bekannte Klotzbremseinheit 30 angeordnet ist.

Die Bremsbalken 10, 11 sind durch sich in Fahrtrichtung X erstreckende Druckstangen 12 miteinander gekoppelt. Die Druckstangen 12 ermöglichen, den Abstand zwischen den Bremsbalken 10, 11 zum Bremseingriff zu verändern.

Dies erfolgt beispielsweise dadurch, dass durch Druckmittelbeaufschlagung von Zylinderkolbentrieben 15, 16 von Bremsaktuatoren, die in dem Bremsbalken 10 aufgenommen sind, die Druckstangen 12 derart betätigt werden, dass die Bremsbalken 10, 11 voneinander weg bewegt werden. Die Verschiebung der Bremsbalken 10, 11 führt dazu, dass die an den Klotzbremseinheiten 30 angeordneten Bremsklötze an die Laufflächen 21 der Schienenräder 2 gedrückt werden und dadurch ein Abbremsen des Schienenfahrzeugs bewirkt wird.

Die Klotzbremseinrichtung 1 wird über Hängelaschen 13 an einem hier nicht dargestellten Drehgestell befestigt.

Wie ein Vergleich der Figuren 1 und 2 zeigt, sind im Gegensatz zu der aus dem Stand der Technik bekannten Klotzbremseinheiten 30 mit einem Bremsschuhhalter und einem einzigen darin aufgenommenen Bremsschuh mit daran befestigten Bremsklötzen bei der in Figur 2 gezeigten bevorzugten Ausführungsvariante einer erfindungsgemäßen Klotzbremseinheit 3 in dem Bremsschuhhalter 7 sowohl ein erster Bremsschuh 5 als auch ein zweiter Bremsschuh 6 aufgenommen.

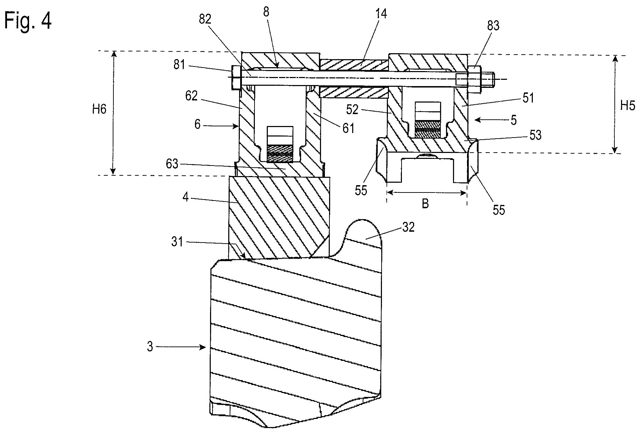

Wie insbesondere in **Figur 4** gut erkennbar ist, ist der zweite Bremsschuh 6 in der Querrichtung Y betrachtet parallel zum ersten Bremsschuh 5 versetzt ausgerichtet im Bremsschuhhalter 7 aufgenommen.

Der erste Bremsschuh 5 ist dabei einer Befestigungsschnittstelle 72 des Bremsschuhhalters 7, die der Befestigung des Bremsschuhhalters 7 an einem der Bremsbalken 10, 11 dient, in der Querrichtung Y betrachtet, näher angeordnet als der zweite Bremsschuh 6.

Die Bremsschuhe 5, 6 sind dabei so angeordnet, dass der innere erste Bremsschuh 5 an die Spurweite beispielsweise für den europäischen Standard von 1435 mm angepasst und der zweite Bremsschuh 6 beispielsweise für eine Breitspur, wie sie beispielsweise im spanischen Standard festgelegt ist, von 1668 mm Spurweite, montiert ist.

So ist in Figur 2 beispielhaft der äußere zweite Bremsschuh 6 mit Bremsklötzen 4, im vorliegenden Ausführungsbeispiel zwei Bremsklötzen 4 bestückt, während am inneren ersten Bremsschuh 5 keine Bremsklötze 4 montiert sind.

Der Bremsschuhhalter 7 weist, wie in den Figuren 2, 4 und 5 gut erkennbar ist, eine Bremsschuhaufnahme 71 auf, in der die Bremsschuhe 5, 6 aufgenommen sind. Die Bremsschuhe 5, 6 sind mittels eines parallel zu einer Drehachse AR des Schienenrads 2 ausgerichteten Haltebolzen 8 schwenkbar am Bremsschuhhalter 7 gelagert. Die Ausrichtung der Drehachse AR entspricht dabei der Querrichtung Y.

Der Haltebolzen 8 ist dabei in Bolzenaufnahmen 73 der Bremsschuhaufnahme 7 fixiert.

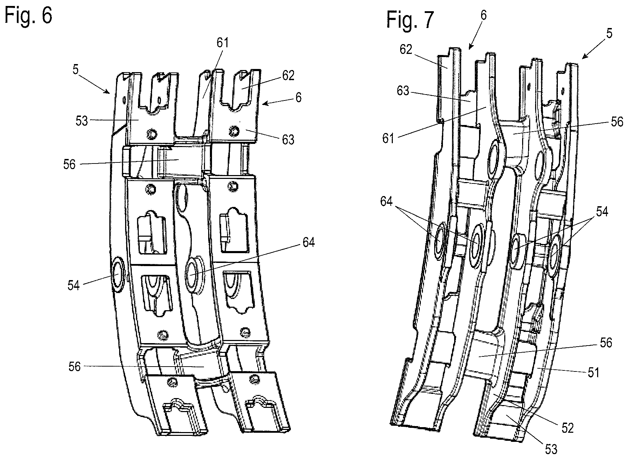

Wie weiter auch in den **Figuren 6 bis 10** gezeigt ist, weist jeder der Bremsschuhe 5, 6 ein u-förmiges Gehäuse mit zwei parallel zueinander ausgerichteten Seitenwänden 51, 52, 61, 62 auf sowie jeweils eine die Seitenwände 51, 52, 61, 62 miteinander verbindende Koppelfläche 53, 63, die der Aufnahme wenigstens einen Bremsklotzes 4 dienen.

Im vorliegenden gezeigten Ausführungsbeispiel sind jeweils zwei solcher Bremsklötze 4 an den Koppelflächen 53, 63 der Bremsschuhe 5 angebracht.

Jede der Seitenwände 51, 52, 61, 62 weist eine Durchgangsbohrung 54, 64 auf, die der Aufnahme des Haltebolzens 8 dient. Der Haltebolzen 8 erstreckt sich dabei im montierten Zustand durch beide Bremsschuhe 5, 6.

Während in den Figuren 6 und 7 eine Ausführungsvariante der Bremsschuhe 5, 6 gezeigt ist, bei denen diese als einstückiges Bauteil ausgebildet sind, die durch wenigstens eine Brücke 56, im gezeigten Ausführungsbeispiel durch zwei solcher Brücken 56, miteinander sind, ist es ebenso denkbar, wie beispielsweise in Figur 4 dargestellt, den ersten Bremsschuh 5 und den zweiten Bremsschuh 6 als separate Bauteil auszubilden.

In diesem Fall ist bevorzugt in einem Bereich zwischen einander zugewandten Seitenwänden 52, 61 der Bremsschuhe 5, 6 der Haltebolzen 8 von einer Abstandshülse 14 umgriffen und gewährleistet so den erwünschten Abstand des ersten Bremsschuhs 5 vom zweiten Bremsschuh 6 zur Positionierung der Bremsschuhe 5, 6 in der Querrichtung Y für die ausgewählten beiden Spurweiten für die Schienenräder 2.

Der Haltebolzen 8 weist bevorzugt einen Bolzenkopf 81 auf, der im gezeigten Ausführungsbeispiel an der äußeren Seitenwand 62 des zweiten Bremsschuhs 6 anliegt, sowie einen Bolzenhals 82, der sich durch die Durchgangsbohrungen 54 und 64 des ersten Bremsschuhs 5 und des zweiten Bremsschuhs 6 erstreckt. Auf der dem zweiten Bremsschuh 6 abgewandten Seite der inneren Seitenwand 51 des ersten Bremsschuhs 5 sichert eine Mutter 83 den Haltebolzen 8 gegen Herausfallen.

Zur Verhinderung eines seitlichen Abkippens der Bremsschuhe 5, 6 um eine zur Fahrtrichtung X parallele Kippachse ist, wie in der Figuren 2, 3 und 5 dargestellt, eine Kippblockierung 9, hier in Gestalt eines weiteren Bolzens, der durch Aufnahmen in wenigstens einem der Bremsschuhe 5, 6 und der Bremsschuhaufnahme 7 durchgeführt ist und der in Zwischenräumen zwischen den jeweiligen Seitenwänden 52, 61 der Bremsschuhe 5, 6 und der Bremsschuhaufnahme 7 Dämpfungselemente hält.

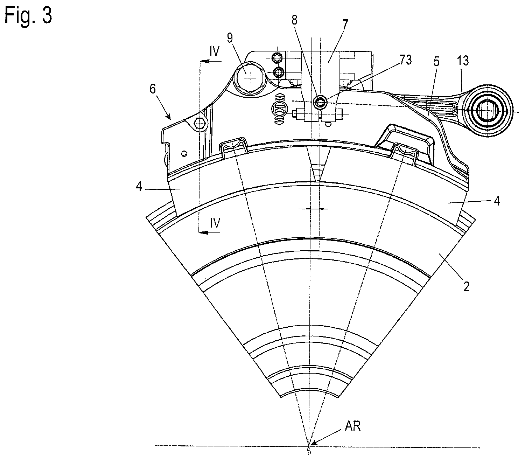

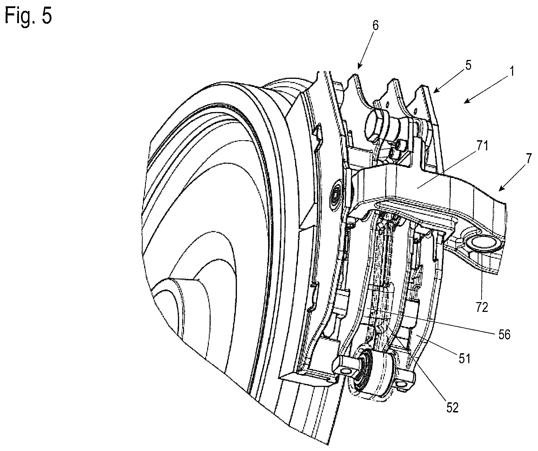

Die Figuren 2 und 3 zeigen dabei ein nur am inneren, ersten Bremsschuh 5 angeordnete Kippblockierung, währen Figur 5 eine Kippblockierung 9 zeigt, die am inneren, ersten Bremsschuh 5 und am äußeren, zweiten Bremsschuh 6 angreift.

Wie weiter in den Figuren 4, 8 und 9 gezeigt ist, ist der Abstand der Koppelfläche 53 des ersten Bremsschuhs 5 vom Haltebolzen 8 kleiner als der Abstand der Koppelfläche 63 des zweiten Bremsschuhs 6 vom Haltebolzen 8.

Denkbar ist grundsätzlich auch eine Anordnung, bei der der Abstand der Koppelfläche 53 des ersten Bremsschuhs 5 vom Haltebolzen 8 größer ist als der Abstand der Koppelfläche 63 des zweiten Bremsschuhs 6 vom Haltebolzen 8.

Die unterschiedlichen Abstände werden dabei insbesondere dadurch ermöglicht, dass die zwei parallel zueinander ausgerichteten Seitenwände 51, 52, 61, 62 des ersten Bremsschuhs 5 und des zweiten Bremsschuhs 6 unterschiedliche Höhen B₅, B₆, betrachtet in Richtung einer Normalen der Koppelfläche 53, 63, dargestellt in Figur 4, aufweisen.

Dieser Versatz V dient dazu, genügend Freiraum zwischen dem äußeren Radkranz 22 des Schienenrads 2 und dem inneren, hier ersten Bremsschuh 5 zu schaffen, insbesondere um ein Anstoßen des Radkranzes 22 des Schienenrads 2 bei Quer- und Längsbewegungen des Radsatzes am inneren ersten Bremsschuh 5 zu verhindern.

Ein solcher Versatz V erhöht zwangsweise das erforderliche Nachstellvermögen eines Gestängestellers der Bremseinheit.

Um diesen Versatz V zwischen dem inneren, ersten Bremsschuh 5 und dem äußeren zweiten Bremsschuh 6 zu verringern, ist bei der gezeigten Ausführungsvariante am inneren ersten Bremsschuh 5 ein Einschnitt 55 an der Koppelfläche 53 angeformt, der die Breite B der Koppelfläche 53, betrachtet in Richtung der Drehachse des Schienenrads 2, verjüngt.

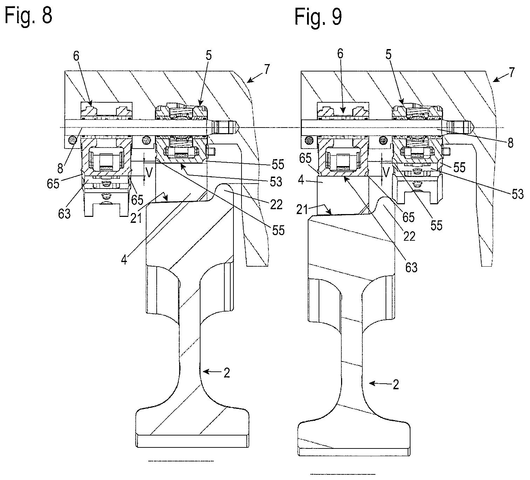

Wie weiter in den Figuren 8 und 9 gezeigt ist, sind solche verjüngenden Einschnitte 55, 65 bevorzugt entlang beider Seiten des ersten Bremsschuhs 5 und des zweiten Bremsschuhs 6 vorgesehen.

Die Einschnitte 55, 65 erstrecken sich dabei bevorzugt bis in die angrenzende Seitenwand 51, 52, 61, 62 des u-förmigen Gehäuses der Bremsschuhe 5, 6.

Die Einschnitte 55, 65 dienen darüber hinaus einem vereinfachten Bremsklotzwechsel.

Im gezeigten Ausführungsbeispiel wird insbesondere die Auswechselung des Bremsklotzes 4 am inneren ersten Bremsschuh 5 durch den zweiten Bremsschuh 6 behindert.

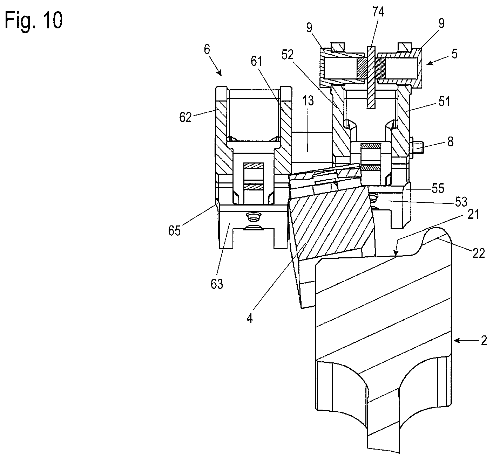

Durch die Vornahme auch eines Einschnitts an der den ersten Bremsschuh 5 zugewandten Seitenwand 61 des zweiten Bremsschuhs 6 ist es, wie in Figur 10 dargestellt, ermöglicht, den Bremsklotz 4 am inneren ersten Bremsschuh 5 bevorzugt durch seitliches Kippen am Schienenrad 2 und am äußeren zweiten Bremsschuh 6 vorbeizuführen.

### BEZUGSZEICHENLISTE

- 1: Klotzbremseinrichtung

- 2: Schienenrad
- 21: Lauffläche
- 22: Radkranz

- 3: Klotzbremseinheit
- 4: Bremsklotz

- 5: erster Bremsschuh
- 51: Seitenwand
- 52: Seitenwand
- 53: Koppelfläche
- 54: Durchgangsbohrung
- 55: Einschnitt
- 56: Brücke

- 6: zweiter Bremsschuh
- 61: Seitenwand
- 62: Seitenwand
- 63: Koppelfläche
- 64: Durchgangsbohrung
- 65: Einschnitt

- 7: Bremsschuhhalter
- 71: Bremsschuhaufnahme
- 72: Befestigungsschnittstelle
- 73: Bolzenaufnahme
- 74: Haltesteg

- 8: Haltebolzen
- 81: Bolzenkopf
- 82: Bolzenhals
- 83: Mutter

- 9: Kippblockierung

- 10: Bremsbalken
- 11: Bremsbalken
- 12: Druckstange
- 13: Hängelasche
- 14: Abstandshülse
- 15: Bremsaktuator
- 16: Bremsaktuator

- x: Fahrtrichtung
- y: Querrichtung
- z: Vertikale
- AR: Drehachse des Schienenrads
- H₅: Höhe der Seitenwände des ersten Bremsschuhs
- H₆: Höhe der Seitenwände des zweiten Bremsschuhs
- B: Breite der Koppelfläche
- V: Versatz

## Patentansprüche

1. Klotzbremseinheit (3) für eine an einem Drehgestell eines Schienenfahrzeugs angeordnete Klotzbremseinrichtung (1), aufweisend
- einen ersten Bremsschuh (5), an dem wenigstens ein an die Lauffläche (21) eines Schienenrads (2) andrückbarer Bremsklotz (4) befestigbar ist,
- einen Bremsschuhhalter (7) mit einer Bremsschuhaufnahme (71), in der der erste Bremsschuh (5) aufgenommen ist, und einer seitlich der Bremsschuhaufnahme (71) angeformten Befestigungsschnittstelle (72) zur Fixierung des Bremsschuhhalters (7) an einem Bremsbalken (10, 11) der Klotzbremseinrichtung (1),
- wobei der Bremsschuh (5) mittels eines parallel zu einer Drehachse (AR) des Schienenrads (2) ausgerichteten Haltebolzens (8) schwenkbar am Bremsschuhhalter (7) gelagert ist,
- wobei der Haltebolzen (8) in Bolzenaufnahmen (73) der Bremsschuhaufnahme (7) fixiert ist,
**dadurch gekennzeichnet, dass**
in dem Bremsschuhhalter (7) ein in Richtung der Drehachse (AR) des Schienenrads (2) parallel zum ersten Bremsschuh (5) versetzt ausgerichteter zweiter Bremsschuh (6) aufgenommen ist.

2. Klotzbremseinheit (3) nach Anspruch 1, **dadurch gekennzeichnet, dass** jeder der Bremsschuhe (5, 6) ein u-förmiges Gehäuse mit zwei parallel zueinander ausgerichteten Seitenwänden (51, 52, 61, 62) und einer die Seitenwände (51, 52, 61, 62) miteinander verbindende Koppelfläche (53, 63) zur Aufnahme des wenigstens einen Bremsklotzes (4) aufweist, wobei jede der Seitenwände (51, 52, 61, 62) eine Durchgangsbohrung (54, 64) zur Aufnahme des Haltebolzens (8) aufweist, wobei der Haltebolzen (8) sich im montierten Zustand durch beide Bremsschuhe (5, 6) erstreckt.

3. Klotzbremseinheit (3) nach Anspruch 1 oder 2, **dadurch gekennzeichnet, dass** der erste Bremsschuh (5) und der zweite Bremsschuh (6) als separate Bauteile ausgebildet sind.

4. Klotzbremseinheit (3) nach Anspruch 1 oder 2, **dadurch gekennzeichnet, dass** der erste Bremsschuh (5) und der zweite Bremsschuh (6) als einstückiges, durch wenigstens eine Brücke (56) miteinander verbundenes Bauteil ausgebildet sind.

5. Klotzbremseinheit (3) nach einem der Ansprüche 2 bis 4, **dadurch gekennzeichnet, dass** der Abstand der Koppelfläche (53) des ersten Bremsschuhs (5) vom Haltebolzen (8) kleiner oder größer ist ist als der Abstand der Koppelfläche (63) des zweiten Bremsschuhs (6) vom Haltebolzen (8).

6. Klotzbremseinheit (3) nach Anspruch 5, **dadurch gekennzeichnet, dass** die zwei parallel zueinander ausgerichteten Seitenwände (51, 52, 61, 62) des ersten Bremsschuhs (5) und des zweiten Bremsschuhs (6) unterschiedliche Höhen (B₅, B₆), betrachtet in Richtung einer Normalen der Koppelfläche (53, 63), aufweisen.

7. Klotzbremseinheit (3) nach einem der vorhergehenden Ansprüche,
**dadurch gekennzeichnet, dass** zumindest einer der beiden nebeneinander angeordneten Bremsschuhe (5, 6) entlang seiner dem anderen der beiden Bremsschuhe (5, 6) zugewandten Seite einen die Breite (B) der Koppelfläche (53, 63), betrachtet in Richtung der Drehachse des Schienenrads (2), verjüngender Einschnitt (55, 65) im Bereich der Koppelfläche (53, 63) angeformt ist.

8. Klotzbremseinheit (3) nach Anspruch 7, **dadurch gekennzeichnet, dass** jeweils ein die Breite der Koppelfläche (53, 63), betrachtet in Richtung der Drehachse des Schienenrads (2), verjüngender Einschnitt (55, 65) entlang beider Seiten des ersten Bremsschuhs (5) und des zweiten Bremsschuhs (6) vorgesehen ist.

9. Klotzbremseinheit (3) nach Anspruch 7 oder 8, **dadurch gekennzeichnet, dass** der wenigstens eine Einschnitt (55, 65) sich bis in die angrenzende Seitenwand (51, 52, 61, 62) des u-förmigen Gehäuses erstreckt.

10. Klotzbremseinheit (3) nach einem der vorhergehenden Ansprüche,
**dadurch gekennzeichnet, dass** in einem Bereich zwischen einander zugewandten Seitenwänden (52, 61) der Bremsschuhe (5, 6) der Haltebolzen (8) von einer Abstandshülse (14) umgriffen ist.

11. Klotzbremseinrichtung (1) für ein Drehgestell eines Schienenfahrzeugs mit zwei in Fahrtrichtung (x) hintereinander angeordneten Radsätzen mit je zwei in einer Querrichtung (y) senkrecht zur Fahrtrichtung (x) angeordneten Schienenrädern (2), aufweisend
zwei in Querrichtung (y) angeordnete Bremsbalken (10, 11), an denen jeweils zwei Klotzbremseinheiten (3) befestigt sind,
wenigstens zwei mit den Bremsbalken (10, 11) gekoppelte, in ihrer Länge einstellbare Druckstangen (12), mit denen ein Abstand zwischen den Bremsbalken (10, 11) zum Bremseingriff veränderbar ist,
**dadurch gekennzeichnet, dass**
die Klotzbremseinheiten (4) gemäß einem der vorstehenden Ansprüche ausgebildet sind.
